# EUROPEAN PATENT SPECIFICATION

(11) **EP 3 932 599 B1**
(45) Date of publication and mention of the grant of the patent: **18.01.2023**
(21) Application number: 20183366.2
(22) Date of filing: 01.07.2020
(51) Int. Cl.: B23B 51/04, B23B 27/14

(54) **A METAL CUTTING INDEXABLE DRILL TOOL**
METALLWENDESCHNEIDPLATTENBOHRWERKZEUG
OUTIL DE FORAGE AMOVIBLE POUR LA DÉCOUPE DES MÉTAUX

(43) Date of publication of application: 05.01.2022
(73) Proprietor: AB Sandvik Coromant, 811 81 Sandviken (SE)
(72) Inventor: CARLBERG, Håkan, 811 81 SANDVIKEN (SE)
(74) Representative: Sandvik

(56) References cited:
- EP-A1- 3 098 006
- DE-T5-112016 005 138
- US-B1- 6 186 705

## Description

### TECHNICAL FIELD

The present invention relates to a metal cutting indexable drill tool according to the preamble of claim 1. Such a metal cutting indexable drill tool is known from US 6 186 705 B1.

### BACKGROUND

In modern subtractive manufacturing drilling is an important operation and especially drilling in metal proves to be a demanding operation.

In metal drilling a drill tool with replaceable metal cutting inserts is often used, especially in CNC operations. The drill tool of the previously discussed type comprises an elongated drill body with a mount shank and a boring shaft. In a distal end of the boring shaft, a center insert for cutting material from the center region of the drilled hole, and a peripheral insert for cutting material in the peripheral region of the hole are arranged. In order to achieve a good drilling operation chip evacuation and chip control are of utmost importance for surface finish and drill speed. But chip evacuation and control are also of great importance for process security and reliability. Especially, the chip control and chip evacuation for the center insert proves to be demanding. The chip that is cut by the center insert is in the form of a spiral cone due to the fact that the peripheral end of the edge cuts a longer chip than the center end of the edge of the insert. Another important parameter of chip forming is the length of the chip which preferably is sufficiently long but not too long. If the chip becomes too long the chip may entangle the drill tool and result in poor process security and in surface damages in the drilled hole, and a too short chip also may result in problems with chip evacuation from the drill tool which of course also will have a bad influence on process security and reliability.

It is in the art well known to provide a drill tool with drill flutes for improved chip evacuation and control. This allows a continuous chip to be formed and directed away from the cutting zone. However, the problem with too long chips is not addressed with drill flutes.

Therefore, it still remains a need to further improve the geometry of a metal cutting drill tool to achieve good chip evacuation and to prevent too long chips to be formed.

It is therefore an object of the present invention to present a metal cutting drill tool that allows an improved chip control.

### SUMMARY

According to the present invention, the above mentioned object is achieved by means of a metal cutting indexable drill tool having the features defined in claim 1.

The metal cutting indexable drill tool according to the present invention comprises an elongated drill body having a boring shaft and a mount shank, a center drill insert mounted at a distal end of the boring shaft in an insert seat configured to hold the insert against a bottom of the insert seat. The metal cutting indexable drill tool further comprises a drill flute of the boring shaft configured to direct and form a chip from the center drill insert, wherein the drill flute comprises a chip forming surface at a distal end of the drill flute, wherein the chip forming surface is perpendicular to the bottom of the insert seat for the center drill insert, and wherein the chip forming surface is arranged at a distance X from a peripheral corner of the center drill insert to a point on a curve, which curve is formed by the intersection of the chip forming surface and an imaginary inscribed sphere, wherein the center of the imaginary inscribed sphere coincide with the center of the distal end of the boring shaft, wherein the radius of the imaginary inscribed sphere is defined by the peripheral corner of the insert; and wherein the distance X divided with the diameter of the drill tool Dc is equal to a chip parameter A which is indicative of the chip diameter to boring diameter ratio. The chip parameter A is 0.3 ≤ A ≤ 0.5. According to one embodiment, the chip parameter A is 0.37≤A. This way a chip with a diameter larger than a minimum value is formed.

According to one embodiment, the chip parameter A is A≤0.42. This allows a chip with a diameter smaller than a maximum value to be formed.

According to one embodiment, said point on the curve is on a midpoint of said curve.

According to one embodiment, the chip forming surface extends a distance w ≥Dc/4 in a radial direction relative a longitudinal axis of the metal cutting drill tool), and where Dc is the diameter of the metal cutting drill tool. This way a sufficiently sized chip forming surface is formed.

According to one embodiment, said chip forming surface is perpendicular to the bottom of the insert seat throughout its entire length.

According to one embodiment, the radial distance d1 from the top of the insert to the chip forming surface is d1=Dc·P where P is 0.04 ≤ P ≤ 0.08, and Dc is said diameter of the drill tool. This way efficient chip evacuation is achieved. According to one embodiment, the radial distance d1 from the top of the insert to the chip forming surface is d1=Dc·P where P is 0.04 ≤ P ≤ 0.06, and Dc is said diameter of the drill tool. This way even more efficient chip evacuation is achieved.

Further advantages of the present invention will appear from the description following below.

### LIST OF DRAWINGS

Fig. 1 is a perspective drawing of a metal cutting indexable drill tool according to an embodiment of the present invention,
Fig. 2 is a top view of the metal cutting indexable drill tool disclosed in Fig. 1, and
Fig. 3 is a perspective view of the distal end of the boring shaft of the metal cutting indexable drill tool disclosed in Fig. 1 and Fig. 2 with an imaginary inscribed sphere.

### DETAILED DESCRIPTION OF EMBODIMENTS

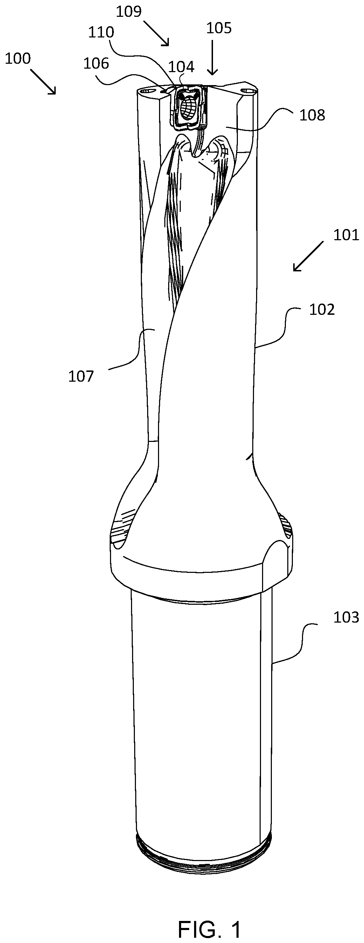

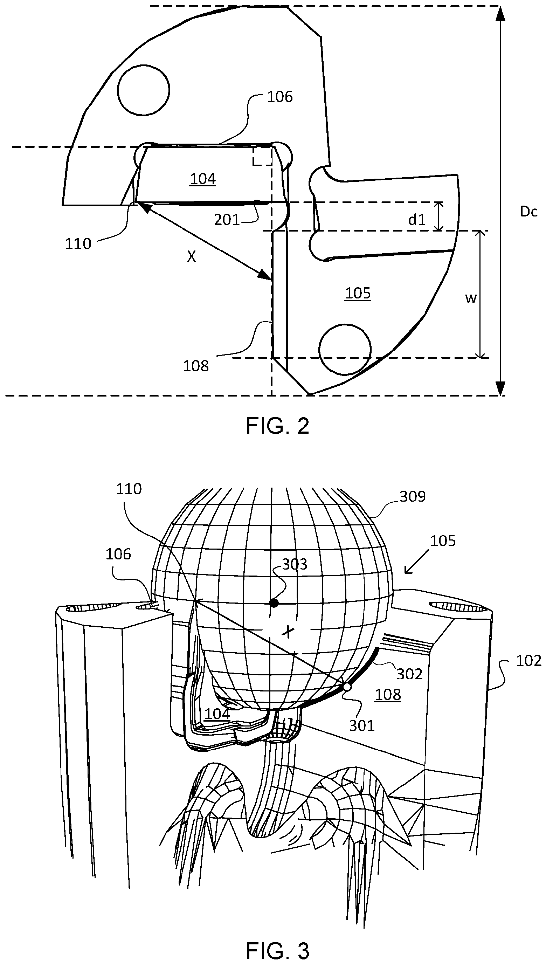

Reference is made to Fig. 1 which shows a metal cutting indexable drill tool 100, comprising an elongated drill body 101 having a boring shaft 102 and a mount shank 103. The metal cutting indexable drill tool further comprises a center drill insert 104 mounted at a distal end 105 of the boring shaft 102 in an insert seat 106 configured to hold the insert against a bottom of the insert seat 106, a drill flute 107 of the boring shaft 102 configured to direct and form a chip from the center drill insert 104. The drill flute 107 comprises a chip forming surface 108 at a distal end 109 of the drill flute 107. The metal cutting indexable drill tool is characterized in that the chip forming surface 108 is perpendicular to the bottom of the insert seat 106 for the center drill insert 104, and in that the chip forming surface 108 is arranged at a distance X from a peripheral corner 110 of the center drill insert 104 to a point 301 on a curve 302, as seen in Fig. 3. The curve is formed by the intersection of the chip forming surface 108 and an imaginary inscribed sphere 309. The center 303 of the imaginary inscribed sphere coincide with the center of the distal end 105 of the boring shaft 102, wherein the radius of the imaginary inscribed sphere is defined by the peripheral corner 110 of the insert 104, and wherein the distance X divided with the diameter of the drill tool Dc is equal to a chip parameter A which is indicative of the chip diameter to boring diameter ratio. The chip parameter A is 03≤ A ≤ 0.5.

The present inventors have realized that by having such a chip parameter A in the above interval, a favourable chip forming process is achieved and a chip with diameter X=A·Dc is formed. The diameter of the formed chip is the diameter of the helical chip formed in the drilling operation, and this is an important parameter for designing a boring shaft. The diameter of the chip may be used to optimize the amount of material in the boring shaft, which means that a stronger boring shaft may be obtained. This way the boring shaft may be designed for increased strength with maintained chip control and chip evacuation.

In one embodiment, the chip parameter A is 0.37 ≤ A. This way a chip with a diameter larger than a minimum is obtained.

In one embodiment, the chip parameter A is A ≤ 0.42. This way a chip with a diameter smaller than a maximum is obtained.

Now with reference made to Fig. 3 again, which shows the imaginary inscribed sphere 309 arranged at the center of the distal end 105 of the boring shaft 102. The center 303 of the imaginary inscribed sphere 309 coincide with the center of the distal end 105 of the boring shaft 102. The radius of the imaginary inscribed sphere is defined by the peripheral corner 110 of the insert 104. The peripheral corner is the radially peripheral corner and axially peripheral corner relative a longitudinal axis of the drill tool 100. In other words the peripheral corner 110 is the radially outermost and axially outermost corner of the insert 104 relative the drill tool 100 and is thus the active corner of the insert which is closest to the wall of the hole which is formed when drilling. The curve 302 is formed by the intersection of the chip forming surface 108 and the imaginary inscribed sphere 309.

In Fig. 3 said point 301 on the curve 302 is on a midpoint of said curve 302. But due to the geometrical relation between the curve 302 and the peripheral corner 110, the point 301 may be placed anywhere on the curve 302 without significant impact on the length of the distance X as shown. The distance X is the shortest distance from the peripheral corner 110 to the point 301.

As illustrated in Fig. 2, said chip forming surface 108 extends a distance w ≥Dc/4 in a radial direction relative a longitudinal axis of the metal cutting drill tool 100, and where Dc is the diameter of the metal cutting drill tool 100.

Fig. 2 shows that said chip forming surface 108 is perpendicular to the bottom of the insert seat 106 throughout its entire length.

Fig. 2 also shows the radial distance d1 from a top 201 of the insert 104 to the chip forming surface 108. This radial distance d1 is d1=Dc·P where P is 0.04 ≤ P ≤ 0.08, and Dc is said diameter of the drill tool 100. This distance d1 is important for chip evacuation and P is preferably 0.04 ≤ P ≤ 0.06.

## Claims

1. A metal cutting indexable drill tool (100), comprising:
an elongated drill body (101) having a boring shaft (102) and a mount shank (103);
a center drill insert (104) mounted at a distal end (105) of the boring shaft (102) in an insert seat (106) configured to hold the insert against a bottom of the insert seat (106);
a drill flute (107) of the boring shaft (102) configured to direct and form a chip from the center drill insert (104), wherein the drill flute (107) comprises a chip forming surface (108) at a distal end (109) of the drill flute (107);
wherein
the chip forming surface (108) is perpendicular to the bottom of the insert seat (106) for the center drill insert (104);
**characterised in that** the chip forming surface (108) is arranged at a distance X from a peripheral corner (110) of the center drill insert (104) to a point (301) on a curve (302), which curve is formed by the intersection of the chip forming surface (108) and an imaginary inscribed sphere (302), wherein
the center (303) of the imaginary inscribed sphere coincide with the center of the distal end (105) of the boring shaft (102), wherein the radius of the imaginary inscribed sphere is defined by the peripheral corner (110) of the insert (104); and
wherein the distance X divided with the diameter of the drill tool Dc is equal to a chip parameter A which is indicative of the chip diameter to boring diameter ratio;
wherein the chip parameter A is 0.3 ≤ A ≤ 0.5.

2. The metal cutting indexable drill tool (100) according to claim 1, ***characterized in* that** the chip parameter A is 0.37 ≤ A.

3. The metal cutting indexable drill tool (100) according to any one of the preceding claims, ***characterized in* that** the chip parameter A is A ≤ 0.42.

4. The metal cutting indexable drill tool (100) according to any one of the preceding claims, ***characterized in* that** said point (301) on the curve (302) is on a midpoint of said curve (302).

5. The metal cutting indexable drill tool (100) according to any one of the preceding claims, ***characterized in* that** said chip forming surface (108) extends a distance w ≥Dc/4 in a radial direction relative a longitudinal axis of the metal cutting drill tool (100), and where Dc is the diameter of the metal cutting drill tool (100).

6. The metal cutting indexable drill tool (100) according to any one of the preceding claims, ***characterized in* that** said chip forming surface (108) is perpendicular to the bottom of the insert seat (106) throughout its entire length.

7. The metal cutting indexable drill tool (100) according to any one of the preceding claims, ***characterized in* that** the radial distance d1 from the top of the insert (104) to the chip forming surface (108) is d1=Dc·P where P is 0.04 ≤ P ≤ 0.08, and Dc is said diameter of the drill tool.

8. The metal cutting indexable drill tool (100) according to any one of the preceding claims, ***characterized in* that** the radial distance d1 from the top of the insert (104) to the chip forming surface (108) is d1=Dc·P where P is 0.04 ≤ P ≤ 0.06, and Dc is said diameter of the drill tool (100).

## Patentansprüche

1. Wendbares Bohrwerkzeug (100) für die Metallbearbeitung mit:
einem länglichen Bohrkörper (101), der eine Bohrwelle (102) und einen Halteschaft (103) aufweist,
einem zentralen Bohreinsatz (104), der an einem distalen Ende (105) der Bohrwelle (102) in einem Einsatzsitz (106) montiert ist, wobei der Einsatzsitz (106) so eingerichtet ist, dass er den Einsatz gegen einen Boden des Einsatzsitzes (106) hält,
eine Bohrnut (107) der Bohrwelle (102), die so eingerichtet ist, dass sie einen Span bildet und von dem zentralen Bohreinsatz (104) wegleitet, wobei die Bohrnut (107) an einem distalen Ende (109) der Bohrnut (107) eine spanbildende Fläche (108) aufweist,
wobei die spanbildende Fläche (108) zu dem Boden des Einsatzsitzes (106) des zentralen Bohreinsatzes (104) senkrecht steht,
**dadurch gekennzeichnet, dass** die spanbildende Fläche (108) von einer peripheren Ecke (110) des zentralen Bohreinsatzes (104) zu einem Punkt (301) auf einer Kurve (302) in einem Abstand X angeordnet ist, wobei die Kurve durch den Übergang der spanbildenden Fläche (108) und einer imaginären eingeschriebenen Kugel (302) gebildet wird, wobei der Mittelpunkt (303) der imaginären eingeschriebenen Kugel mit dem Mittelpunkt des distalen Endes (105) der Bohrwelle (102) übereinstimmt, wobei der Radius der imaginären eingeschriebenen Kugel durch die periphere Ecke (110) des Einsatzes (104) definiert ist, und
wobei der Abstand X geteilt durch den Durchmesser des Bohrwerkzeugs Dc gleich einem Spanparameter A ist, der das Verhältnis des Spandurchmessers zu dem Bohrdurchmesser bezeichnet,
wobei der Spanparameter A die Bedingung 0,3 ≤ A ≤ 0,5 erfüllt.

2. Wendbares Bohrwerkzeug (100) für die Metallbearbeitung nach Anspruch 1, **dadurch gekennzeichnet, dass** der Spanparameter A die Bedingung 0,37 ≤ A erfüllt.

3. Wendbares Bohrwerkzeug (100) für die Metallbearbeitung nach einem der vorangehenden Ansprüche, **dadurch gekennzeichnet, dass** der Spanparameter die Bedingung A ≤ 0,42 erfüllt.

4. Wendbares Bohrwerkzeug (100) für die Metallbearbeitung nach einem der vorangehenden Ansprüche, **dadurch gekennzeichnet, dass** der Punkt (301) auf der Kurve (302) auf einem Mittelpunkt der Kurve (302) liegt.

5. Wendbares Bohrwerkzeug (100) für die Metallbearbeitung nach einem der vorangehenden Ansprüche, **dadurch gekennzeichnet, dass** sich die spanbildende Fläche (108) in einer radialen Richtung bezogen auf die Längsachse des Bohrwerkzeugs (100) für die Metallbearbeitung in einem Abstand w ≥ Dc/4 erstreckt, wobei Dc der Durchmesser des Bohrwerkzeugs (100) für die Metallbearbeitung ist.

6. Wendbares Bohrwerkzeug (100) für die Metallbearbeitung nach einem der vorangehenden Ansprüche, **dadurch gekennzeichnet, dass** die spanbildende Fläche (108) über deren gesamte Länge zu dem Boden des Einsatzsitzes (106) senkrecht verläuft.

7. Wendbares Bohrwerkzeug (100) für die Metallbearbeitung nach einem der vorangehenden Ansprüche, **dadurch gekennzeichnet, dass** der radiale Abstand d1 von dem oberen Ende des Einsatzes (100) zu der spanbildenden Fläche (108) die Bedingung d1 = Dc x P erfüllt, wobei P die Bedingung 0,04 ≤ P ≤ 0,08 erfüllt, und wobei Dc der Durchmesser des Bohrwerkzeugs ist.

8. Wendbares Bohrwerkzeug (100) für die Metallbearbeitung nach einem der vorangehenden Ansprüche, **dadurch gekennzeichnet, dass** der radiale Abstand d1 von dem oberen Ende des Einsatzes (104) der spanbildenden Fläche (108) die Bedingung d1 = Dc x P erfüllt, wobei P die Bedingung 0,04 ≤ P ≤ 0,06 erfüllt, und wobei Dc der Durchmesser des Bohrwerkzeugs (100) ist.

## Revendications

1. Outil de perçage amovible de découpe de métal (100), comprenant :
un corps de foret allongé (101) présentant une tige de perçage (102) et une queue de montage (103) ;
une plaquette de foret centrale (104) montée au niveau d'une extrémité distale (105) de la tige de perçage (102) dans un siège de plaquette (106) configuré pour maintenir la plaquette contre un fond du siège de plaquette (106) ;
une goujure de foret (107) de la tige de perçage (102) configurée pour orienter et former un copeau depuis la plaquette de foret centrale (104), où la goujure de foret (107) comprend une surface de formation de copeaux (108) au niveau d'une extrémité distale (109) de la goujure de foret (107) ;
où la surface de formation de copeaux (108) est perpendiculaire au fond du siège de plaquette (106) destiné à la plaquette de foret centrale (104) ;
**caractérisé en ce que** la surface de formation de copeaux (108) est agencée à une distance X d'un coin périphérique (110) de la plaquette de foret centrale (104) à un point (301) sur une courbe (302), laquelle courbe est formée par l'intersection de la surface de formation de copeaux (108) et une sphère inscrite imaginaire (302), où le centre (303) de la sphère inscrite imaginaire coïncide avec le centre de l'extrémité distale (105) de la tige de perçage (102), où le rayon de la sphère inscrite imaginaire est défini par le coin périphérique (110) de la plaquette (104) ; et
où le rapport de la distance X divisée par le diamètre de l'outil de perçage Dc est égal à un paramètre de copeaux A lequel est représentatif du rapport du diamètre de copeaux sur le diamètre de perçage ;
où le paramètre de copeaux A est 0,3 ≤ A ≤ 0,5.

2. Outil de perçage amovible de découpe de métal (100) selon la revendication 1, ***caractérisé en ce* que** le paramètre de copeaux A est 0,37 ≤ A.

3. Outil de perçage amovible de découpe de métal (100) selon l'une quelconque des revendications précédentes, ***caractérisé en ce* que** le paramètre de copeaux A est A ≤ 0,42.

4. Outil de perçage amovible de découpe de métal (100) selon l'une quelconque des revendications précédentes, ***caractérisé en ce* que** ledit point (301) sur la courbe (302) est sur un point milieu de ladite courbe (302).

5. Outil de perçage amovible de découpe de métal (100) selon l'une quelconque des revendications précédentes, ***caractérisé en ce* que** ladite surface de formation de copeaux (108) s'étend sur une distance w ≥ Dc/4 dans une direction radiale par rapport à un axe longitudinal de l'outil de perçage de découpe de métal (100), et où Dc est le diamètre de l'outil de perçage de découpe de métal (100).

6. Outil de perçage amovible de découpe de métal (100) selon l'une quelconque des revendications précédentes, ***caractérisé en ce* que** ladite surface de formation de copeaux (108) est perpendiculaire au fond du siège de plaquette (106) sur toute sa longueur.

7. Outil de perçage amovible de découpe de métal (100) selon l'une quelconque des revendications précédentes, ***caractérisé en ce* que** la distance radiale d1 depuis le sommet de la plaquette (104) jusqu'à la surface de formation de copeaux (108) est d1 = Dc·P où P est 0,04 ≤ P ≤ 0,08, et Dc est ledit diamètre de l'outil de perçage.

8. Outil de perçage amovible de découpe de métal (100) selon l'une quelconque des revendications précédentes, ***caractérisé en ce* que** la distance radiale d1 depuis le sommet de la plaquette (104) jusqu'à la surface de formation de copeaux (108) est d1 = Dc·P où P est 0,04 ≤ P ≤ 0,06, et Dc est ledit diamètre de l'outil de perçage (100).
